# EUROPEAN PATENT APPLICATION

(11) **EP 4 837 789 A1**
(43) Date of publication of application: **11.11.2026**
(21) Application number: 26176997.0
(22) Date of filing: 06.05.2026
(51) Int. Cl.: B60R 21/02, A01K 1/02, B60R 7/02

(54) **A COLLAPSIBLE PET ENCLOSURE**

(30) Priority: 08.05.2025 SE 2550445
(71) Applicant: Polestar Performance AB, 405 31 Göteborg (SE)
(72) Inventor: ERNTSSON, Axel, 423 51 Torslanda (SE); BLOMMÉ, Conny, 459 33 Ljungskile (SE)
(74) Representative: Zacco Sweden AB

(57) **Abstract**

The present disclosure relates to a collapsible pet enclosure (1) for a vehicle (100) comprising a wall (2) having an opening (2b) and a hatch (2a), wherein the hatch (2a) is movable between a closed position, and a collapsed position that exposes said opening (2b). Further, the pet enclosure (1) comprises a first fixation portion (3) and a mesh structure (4) connected between the hatch (2a) and a border (2b') of the opening (2b), wherein in said collapsed position of the hatch (2a), the mesh structure (4) defines an enclosure for a pet. Further, the first fixation portion (3) is arranged to interlock with a rear seat anchor element (101).

## Description

### TECHNICAL FIELD

The present disclosure relates to a collapsible pet enclosure and a vehicle comprising such.

### BACKGROUND

Cargo areas in vehicles provide a limited space useful for storage. However, these areas usually lack proper ventilation and natural light.

Drivers of vehicles, often place their pets in the cargo area to provide more space for the pet and keep the interior cleaner. Thus, some drivers use the cargo area as a default spot for transporting pets, even though it may not be ideal for their comfort or safety.

Accordingly, when pets are placed in the cargo area of a vehicle, they are physically separated from the main cabin where the occupants sit. This distance can make the pet feel isolated and anxious, as they are unable to see, hear, or interact with their owner easily. Pets may respond to this separation by whining, barking, or moving around restlessly, which can be distressing for both the animal and the driver. This may in turn lead to that the driver, aware of their pet's discomfort becomes distracted during the drive. This distraction can lead to that the safety of the driver and other vehicles on the road is at risk.

In other words, ensuring that pets are securely but comfortably positioned within sight or near the driver can help reduce anxiety for both and promote safer driving conditions.

Currently, there are no solutions in the present art that ensure that pets are flexibly and comfortably positioned inside the vehicle cargo area without being too isolated from the occupants in the vehicle.

Based on the aforementioned, there is a need for a pet enclosure for a vehicle that is able to allow access to the vehicle cabin without excessively isolating or releasing the pet. Specifically, such a pet enclosure should be efficient to assemble/disassemble in a vehicle and/or be compact to integrate with the vehicle. Such a pet enclosure provides both a safe and comfort ride of the pet.

Therefore, it would be desirable to provide a pet enclosure for a vehicle that is efficient in isolation capability, compact and/or convenient to install.

### SUMMARY

It is therefore an object of the present disclosure to alleviate at least some of the mentioned drawbacks to provide a pet enclosure for a vehicle.

The present disclosure is at least partly based on the insight that the pet enclosure is advantageous compared to pet enclosures of the present art as pet enclosure is collapsible and arranged to interlock with a rear seat anchor element. A rear seat anchor element may be the element existing in any vehicle which is arranged to maintain the rear seat in its upright position. Thus, when the rear seat is folded, a rear seat latch (or the like) may be disconnected from the rear seat anchor element so to be folded into the cabin.

The present disclosure relates to a collapsible pet enclosure (also referred to as "enclosure" herein) for a vehicle comprising a wall (may also be referred to as an enclosure) having an opening and a hatch, wherein the hatch is movable between a closed position, and a collapsed/open position that exposes the opening of the wall. The pet enclosure comprises a first fixation portion/unit, and further comprises a mesh structure connected between the hatch and (a border of) the opening, wherein in said collapsed position of the hatch, the mesh structure defines an enclosure for a pet. Further, the first fixation portion is arranged to interlock with a rear seat anchor element.

Advantageously, the pet enclosure is compact and easy to mount while allowing the pet to interact with extended space into the vehicle cabin.

The first fixation portion may comprise a portion of the wall and/or may comprise a separate portion connected/attached/fixed to the pet enclosure, preferable to the wall.

The mesh structure may comprise a transparent mesh structure. The mesh structure may be a woven web. The mesh structure may comprise a window which allows the pet to look through. The mesh structure may be a strong/reliable material to hold the pet within it.

The wall may be referred to as a sheet or a plate. The wall may be rigid. The wall may be made of metal and/or composite material.

Further, the wall may be dimensioned to at least partially seal a cargo opening established upon folding at least one backseat of the vehicle. The cargo opening may create a passage between cabin and cargo area. Accordingly, the wall may have a width equal to, or greater than a width of the at least one folded backseat of the vehicle. Alternatively, or additionally, the height of the wall may be equal to or greater than a height of a seatback frame of the at least one backseat. The seatback frame may exclude a headrest adjustably connected to the seatback frame.

The rear seat anchor element may be mounted on the vehicle body, for example at a part of the vehicle body associated with or connected with a C-pillar of the vehicle. Thus, the rear seat anchor element may be arranged to be mounted on a vehicle body i.e. shaped and dimensioned to be mounted on a vehicle body.

The hatch may be arranged to, in said collapsed position, overlay a back surface of at least one folded backseat. The hatch may be overlayed to rest/abut on the folded backseat. Thus, the folded backseat may support the hatch, allowing for the hatch to support a weight of a pet.

In some aspects, the first fixation portion is connected to a first side portion of the wall. Thus, the pet enclosure may also comprise a second fixation portion connected to an opposite second side portion of said wall. The second fixation portion may be arranged to interlock with a rear seat anchor element mounted at a back of a centre back seat. The first and second side portions of the wall may refer to longitudinal/vertical edge parts of the wall (that extend from top to bottom of the wall). Said first side portion may be on a first longitudinal/vertical edge part of the wall, and said opposite second side portion of said wall may be on the second longitudinal/vertical edge of the wall. Said first side portion and said opposite second side portion may be arranged to have a horizontal distance across the opening of the wall in between. Advantageously, said first fixation portion and said second fixation portion in connection with the first and second side portion may enable secure the pet enclosure in position when mounted in the vehicle.

The rear seat anchor element may be a back seat tether anchor/ring/rigid hook loop. Thus, the second fixation portion may be a hook for engaging the said anchor element.

Advantageously, the fixation portions may allow the pet enclosure to be securely mounted to the vehicle. In some aspects, the pet enclosure may be mounted without/void of any fastening elements such as screws, bolts, rivets, or the like. Thus, the anchor elements may be a rigid hook loop/ring and the first fixation portion may comprise a slot, hook or any other means for engaging with the rigid hook loop.

In some aspects, the first fixation portion may comprise a slot, the slot being dimensioned to align or fit the anchor element, e.g., the rigid hook loop so that, when mounted, the anchor element protrudes from the slot to engage and secure the first fixation portion with the anchor element.

In some aspects, the first fixation portion may comprise an arm/arm portion. The slot may be formed in the arm/arm portion. The arm may be extended or projected to form an inclined or acute angle relative to the wall. In other words, the arm may project from the wall forwardly along a depth axis. The arm may project along a depth axis (forwardly of the front surface of the wall) and a horizontal axis so to be able to attach to the anchor element positioned at a distance from a front surface of the wall, when the wall is mounted in a cargo opening. The slot may be formed on a front surface of the arm, the front surface may form an angle relative to the wall. The front surface may be substantially perpendicular relative to the wall. Substantially referring to that the angle may be 90 degree, and may vary with +-10 degrees. Thus, the slot may extend in a direction in parallel to the front/back surface of the wall and/or may extend along a width-direction of the vehicle when mounted. In addition, the arm and/or the slot may be adapted to fit with a rear seat anchor element that protrudes forwardly in view of the vehicle and/or the front surface of the wall.

The arm portion may be formed by a bent sheet (with thickness of 0.1-8mm, preferably 1-5mm) with the slot at an end portion of the bent sheet. The bent sheet may be meandering so to be able to reach a rear seat anchor element with an offset horizontally and forwardly from the wall, when the wall is mounted. Accordingly, the arm may define a contour. The contour may be shaped by mechanical bending.

Advantageously, an efficient mounting is provided, without compensating compactness of the enclosure.

An advantage of that the slot of the enclosure extend in a width-direction of the vehicle when mounted is that the enclosure is able to be locked for forward and backward movement (using vehicle motion as reference).

The arm, or contour defined thereby may enable extension of the first fixation portion between a first plane and a second plane, the first and the second plane having different orientations. The first and the second plane may thus be spatially offset. The first plane may be aligned with the wall front surface and the second plane may be aligned with a fixation point (e.g. slot) of the first fixation portion so to be associated with the rear seat anchor element. Further, the first and second planes may be angled relative to each other by 30-65 degrees.

Moreover, in an aspect where the pet enclosure may also comprise the second fixation portion in the form of a hook/latch/hanger or any other protrusion. The hook may protrude forwardly from the wall (vehicle forward direction). The second fixation portion may be dimensioned to secure the wall sideward (along a horizontal axis of the enclosure, in a width-direction of a vehicle). Accordingly, the second fixation portion may be arranged to interlock with an anchor element mounted at a back of a centre back seat. The second side portion of the wall may refer to the longitudinal/vertical edge part of the wall (that extend from top to bottom of the wall) which is on the opposite side of the wall in relation to the first side portion in the horizontal axis of the enclosure.

The anchor element may be a back seat tether anchor/ring/rigid hook loop. Thus, as specified in the aforementioned, the second fixation portion may be a hook for engaging the tether anchor/ring/rigid hook loop. The back seat tether anchor may be a metal attachment point located behind the vehicle's centre rear seat for securing a top tether strap of a child safety seat.

The first fixation portion may be arranged to engage with rear seat anchor element to lock the enclosure forwardly and backwardly and the second fixation portion may be arranged to engage with an anchor element mounted at a back of a centre back seat to lock the enclosure horizontally/sideways.

Each fixation portion may comprise at least one of a releasable/slidable mount with a corresponding part being connected with the wall.

Each fixation portion may be slidably adjustable relative to the wall along a vertical axis.

Further, the wall may have a thickness of 1-10 mm, preferably 2-8 mm. Thereby, being efficient strong and lightweight. The wall may be formed by metal, e.g., aluminium.

Moreover, the pet enclosure may comprise a back cage frame arranged to be connected to a back surface of said wall. The back cage frame may be a rigid frame. The back cage frame may be an off-the-shelf cage. The back cage frame may comprise an open front portion to be attached to the wall.

Accordingly, the back cage frame, together with the defined pet enclosure, when arranged in the collapsed position of the hatch, may form an extended enclosure for a pet to enter the vehicle cabin.

A front surface of said wall may be arranged to abut a back of a centre back seat. Thus, providing a secure mounting to the vehicle.

The mesh structure may comprise at least one support rib for allowing the mesh structure to maintain shape, be deployed more easily and have increased structural stability.

The mesh structure may be a flexible mesh structure. The mesh structure may be formed by fabric, (e.g. nylon) plastic or any other suitable material. The mesh structure may be made of strong material to hold the pet within the structure in a vehicle driving and/or breaking scenario.

The wall may be formed by metal, preferably aluminium. Advantageously, the wall may be a lightweight structure.

The hatch may comprise hinges and/or hinged connection. Accordingly, the hatch may be connected to the wall via a hinged connection and movable by hinged connection The hinged connection may be provided by hinges and/or a flexible joint (e.g. flip lid).

The mesh structure may be dimensioned to tension in said collapsed position. The collapsed position may be a position in which the hatch is angled with at least 70 degrees relative to the wall, preferably at least 90 degrees relative to the wall so to provide a space that the pet can use to e.g. sit on.

The pet enclosure, in its closed position, may have a thickness of less than 3 cm.

The wall may have a height of at least 0.5m and a width of at least 0.5m. Preferably the width is equal to or greater than a width of a seat that is folded.

The present disclosure further relates to a vehicle comprising the pet enclosure of any aspect herein. The vehicle may be a sedan, a coupe, a SUV or any other type of vehicle. The vehicle may be a passenger vehicle with a cargo area behind its back seat. In some aspects, the vehicle may be void of a back window. The vehicle may comprise at least one backseat and a rear seat anchor element.

The vehicle may comprise any vehicle feature referred to in the aforementioned with respect to the pet enclosure. Thus, to avoid undue repetition these features are not repeated.

In some aspects, a vehicle backseat structure is provided comprising at least one vehicle back seat and a rear seat anchor element.

### BRIEF DESCRIPTION OF THE DRAWINGS

These and other features and advantages of the present disclosure will now be further clarified and described in more detail, with reference to the appended drawings;
- Figure 1A: illustrates an objective back view of a pet enclosure in a closed position in accordance with some aspects of the present disclosure;
- Figure 1B: illustrates an objective back view of a pet enclosure in a collapsed position in accordance with some aspects of the present disclosure;
- Figure 2A: illustrates an objective front view of a pet enclosure in a collapsed position in accordance with some aspects of the present disclosure;
- Figure 2B: illustrates an objective back view of a pet enclosure in a closed position in accordance with some aspects of the present disclosure;
- Figure 3: illustrates an interior of a vehicle with a pet enclosure in a closet position mounted in a cargo opening established by folding a back seat of the vehicle;
- Figure 4: illustrates an objective view of a part of an enclosure in accordance with some aspects of the present disclosure; and
- Figure 5: illustrates a side view of a vehicle in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and Band C, A and B, Band C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

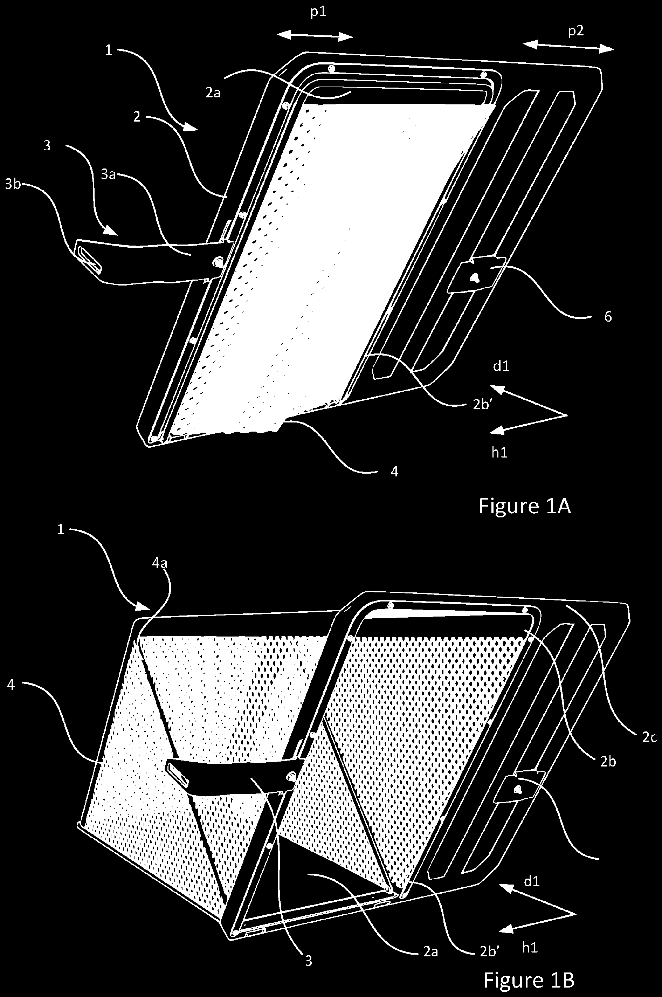

Figure 1A illustrates an objective back view of a collapsible pet enclosure 1 for a vehicle 100 in a closed position. The pet enclosure 1 comprises a wall 2 having an opening 2b and a hatch 2a, wherein the hatch 2a is movable between a closed position, and a collapsed position that exposes said opening 2b. In Figure 1A, the enclosure 1 is in a closed position such that the hatch 2a is fitted in the opening 2a. The wall 2 may, as illustrated in Figure 1A, be sheet-like and have a thickness of 1-10 mm. Further, Figure 1A illustrates that the enclosure 1 comprises a first fixation portion 3. Moreover, the enclosure 1 comprises a mesh structure 4 connected between the hatch 2a and a border 2b' of the opening 2b. In said collapsed position of the hatch 2a the mesh structure 4 defines an enclosure/cage for a pet (shown in Figure 1B). The first fixation portion 3 is arranged to interlock with a rear seat anchor element (not shown in Figure 1A). The mesh structure 4 may be connected in any suitable manner between the hatch 2a and the border 2b' of the opening 2b that allows the mesh structure 4 to form enclosed area between the hatch and the border 2a, 2b' when the enclosure 1 is in its collapsed position, as illustrated in Figure 1B. The mesh structure 4 may form connection between hatch 2a and border 2b' by adhesive, frame, screws or any combination thereof.

Figure 1A illustrates that the first fixation portion 3 may be connected to a first side portion p1 of said wall 2 so to project horizontally from said first side portion p1.

Moreover, Figure 1A illustrates that the pet enclosure 1 may comprise a second fixation portion 6 connected to an opposite second side portion p2 of said wall 2. The second fixation portion 6 being arranged to interlock with a rear seat anchor element (not shown in Figure 1A) mounted at a back of a centre back seat. Thus, the first and second fixation portions 3, 6 may secure the enclosure to vehicle frame/seat from different directions. The first fixation portion 3 may, when engaged, to the rear seat anchor element, restrict movement of the enclosure 1 along one first axis, wherein the second fixation portion 6 may, when secured to the rear seat anchor element restrict movement of the enclosure along another axis, different from the first axis. The first axis may be a depth axis d1 and the another axis may be a horizontal axis h1 as exemplified in Figure 1A and 1B.

Figure 1B illustrates an objective back view of the enclosure 1 in said collapsed position. Accordingly, Figure 1B illustrates that the mesh structure 4 defines an enclosure/cage for a pet. The mesh structure in Figure 1B is tensioned. Further, Figure 1B illustrates that the mesh structure 4 may comprise at least one support rib 4a. The mesh structure may be a flexible mesh structure so to allow it to be held compact when in the closed position of Figure 1A. The back surface 2c of said wall 2 may be connected to a back cage frame (not shown). The back cage frame may be arranged to, jointly with the volume defined by the mesh define a cage for a pet where a part of the cage is in the cargo of the vehicle and the other part of the cage is extended via the meshed structure 4 above the folded backseat in the vehicle cabin.

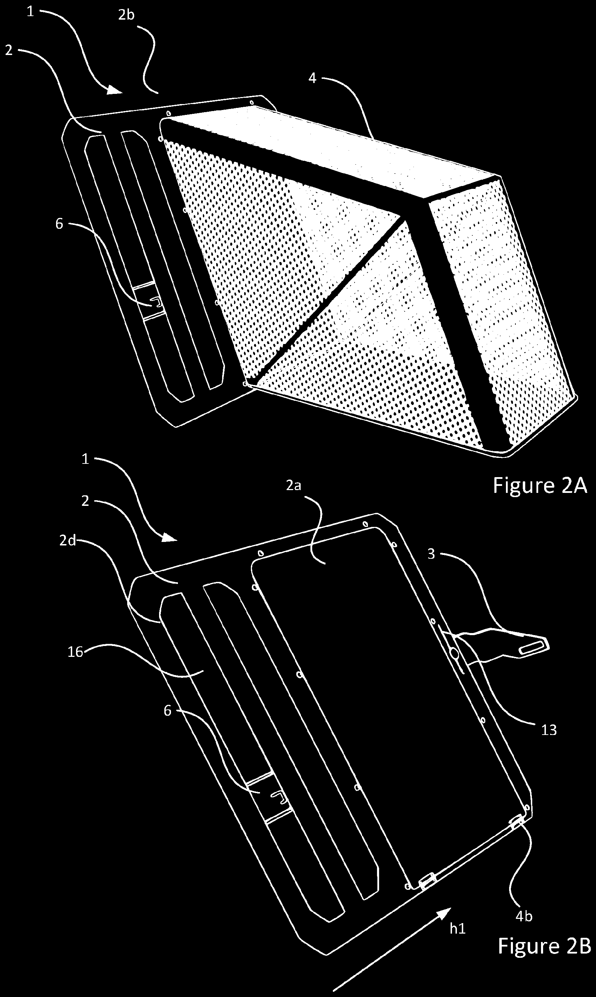

Figure 2A illustrates an objective front view of the enclosure 1 in the collapsed position. Figure 2A illustrates that the second fixation portion 6 may comprise a hook. In Figure 2A the hook protrudes from the front surface 2d of the wall 2. The hook is arranged to engage with a rear seat anchor element mounted at a back of a centre backseat (not shown), wherein the rear seat anchor element may be a rigid hook loop/back seat tether anchor/ring.

Figure 2B illustrates an objective front view of the enclosure 1 in the closed position. Figure 2B illustrates that the hatch 2a may be connected to the wall 2 by hinges so to allow the hatch 2a to pivot relative to the wall 2 (specifically a bottom part of the opening of the wall) via a hinged connection 4b.

Figure 2B illustrates that the fixation portions 3, 6 may be adjusted vertically (perpendicular to axis h1) along a respective track 13, 16.

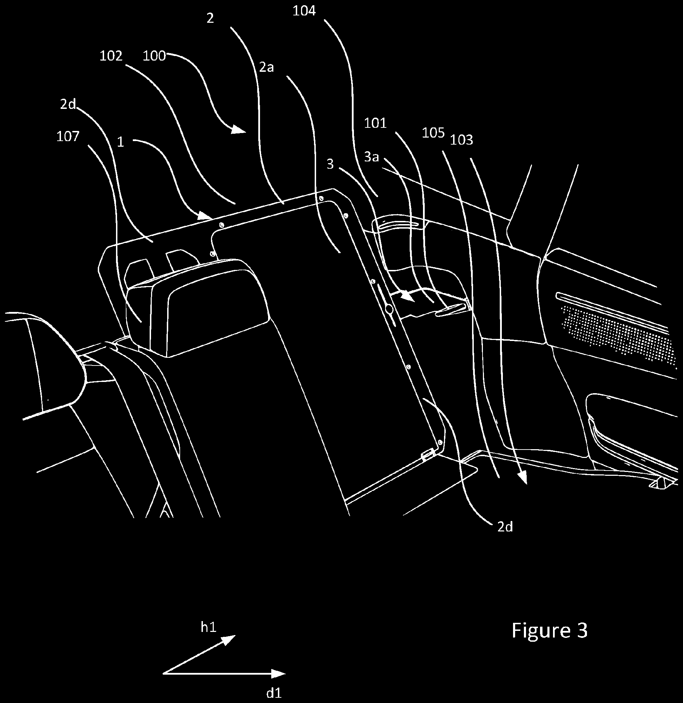

Figure 3 illustrates a part of an interior of a vehicle 100 in which the enclosure 1 is mounted to seal a cargo opening 102 established upon folding a side backseat 103 of said vehicle 100. In Figure 3, the enclosure is in a closed position. Figure 3 illustrates that the first fixation portion 3 is interlocked with a rear seat anchor element 101 located on the vehicle body 104. Figure 3 illustrates that the hatch 2a may be arranged to, in said collapsed position, overlay a back surface 105 of the folded backseat 103. Thus, the enclosure 1 may be dimensioned so that the hatch 2a rests upon the folded backseat 103 in its collapsed position. In Figure 3, a part of the folded backseat 103 is illustrated. Figure 3 illustrates that the enclosure 1 covers a portion of the cargo opening 102. The enclosure 1 covers a width corresponding to the width of the backseat 103 and a height corresponding to the height of the backseat 103. Nonetheless, the enclosure 1 may cover width/heights corresponding to at least 80% of width/heights of the back seat 103.

Figure 3 further illustrates that a front surface 2d of said wall 2 may abut upon a back of the centre back seat 107. Figure 3 further illustrates that the arm 3a projects from the wall 2 forwardly along the depth axis d1. The arm 3a also project along the horizontal axis h1 so to be able to attach to the rigid hook loop 101 positioned at a distance from the wall 2. The rigid hook loop 101 secures enclosure 1 along at least forward and backward directions, while it is illustrated that the enclosure 1 is not locked in the horizontal direction h1 by the rigid hook loop 101. Thus, the second fixation portion 6 may lock the wall in the horizontal direction h1.

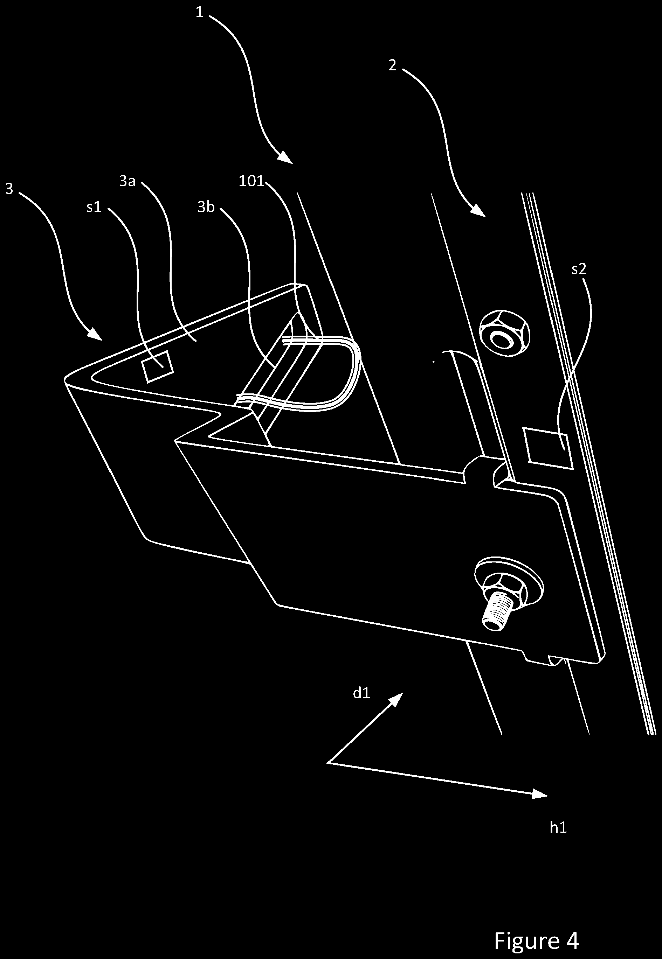

Figure 4 illustrates a back view of a part of the enclosure 1 in which the first fixation portion 3 is emphasized. Figure 4 illustrates that the arm 3a protrudes from said wall along horizontal and depth axis h1, d1 to define a contour. The contour may be shaped by mechanical bending. The directions h1 and d1 may correspond to width and backward/forward directions of the vehicle. The arm 3 may, as illustrated, be a sheet with thickness of 0.1 - 8 mm, preferably 1-5 mm.

Figure 4 illustrates that the slot 3b is mated with the rear seat anchor element 101 so to lock the pet enclosure along the depth axis d1. Figure 4 illustrates that the contour of the arm 3a enables extension of the first fixation portion 3 between a first plane and a second plane s1, s2, the first and the second plane s1, s2 having different orientations (may be perpendicular). Thus, a first portion of the arm 3a may extend horizontally along the horizontal axis h1 and a second portion thereof may extend along the depth axis d1. Accordingly, the slot 3b may have an axial extension along the horizontal axis h1. Figure 4 illustrates that the arm 3a may be bent to form at least two (substantially) perpendicular sections.

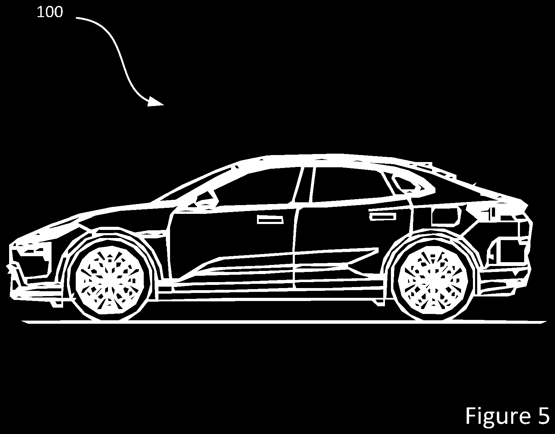

Figure 5 illustrates a side-view of a passenger vehicle 100. The vehicle 100 may comprise the pet enclosure of any aspect herein.

## Claims

1. A collapsible pet enclosure (1) for a vehicle (100) comprising:
- a wall (2) having an opening (2b) and a hatch (2a), wherein the hatch (2a) is movable between a closed position, and a collapsed position that exposes said opening (2b);
- a first fixation portion (3);
- a mesh structure (4) connected between the hatch (2a) and a border (2b') of the opening (2b), wherein in said collapsed position of the hatch (2a), the mesh structure (4) defines an enclosure for a pet;
wherein the first fixation portion (3) is arranged to interlock with a rear seat anchor element (101).

2. The pet enclosure (1) of claim 1, wherein the wall (2) is dimensioned to at least partially seal a cargo opening (102) established upon folding at least one backseat (103) of said vehicle (100).

3. The pet enclosure (1) of claim 1 or 2, wherein the rear seat anchor element (101) is arranged to be mounted on a vehicle body (104).

4. The pet enclosure (1) of any one of the preceding claims, wherein the hatch (2a) is arranged to, in said collapsed position, overlay a back surface (105) of at least one folded backseat (103).

5. The pet enclosure (1) of any one of the preceding claims, wherein the first fixation portion (3) is connected to a first side portion (p1) of said wall (2).

6. The pet enclosure (1) of claim 5, wherein the pet enclosure (1) comprises a second fixation portion (6) connected to an opposite second side portion (p2) of said wall (2), the second fixation portion (6) being arranged to interlock with a rear seat anchor element mounted at a back of a centre back seat (107), preferably the rear seat anchor element is a back seat tether anchor and the second fixation portion (6) comprises a hook.

7. The pet enclosure (1) of any one of the preceding claims, wherein the wall (2) has a thickness of 1-10 mm, preferably 2-8 mm.

8. The pet enclosure (1) of any one of the preceding claims, wherein the pet enclosure (1) comprises a back cage frame arranged to be connected to a back surface (2c) of said wall (2).

9. The pet enclosure (1) of any one of the preceding claims, wherein a front surface (2d) of said wall (2) is arranged to abut a back of a centre back seat (107).

10. The pet enclosure (1) of any one of the preceding claims, wherein the first fixation portion (3) comprises an arm (3a) having a slot (3b) arranged for engaging with said rear seat anchor element (101), wherein the rear seat anchor element (101) is a rigid hook loop.

11. The pet enclosure (1) according to claim 10, wherein said arm (3a) protrudes from said wall in horizontal and depth directions (h1, d1) to define a contour, wherein said contour is shaped by mechanical bending.

12. The pet enclosure (1) according to claim 11, wherein said contour enables extension of the first fixation portion (3) between a first plane and a second plane (s1, s2), the first and the second plane (s1, s2) having different orientations.

13. The pet enclosure (1) of any one of the preceding claims, wherein the mesh structure (4) comprises at least one support rib (4a).

14. The pet enclosure (1) of any one of the preceding claims, wherein the mesh structure (4) is a flexible mesh structure.

15. A vehicle (100) comprising the pet enclosure (1) of any one of the preceding claims.
